# FASCICULE DE BREVET EUROPEEN

(11) **EP 1 924 470 B1**
(45) Date de publication et mention de la délivrance du brevet: **08.05.2013**
(21) Numéro de dépôt: 06805686.0
(22) Date de dépôt: 12.09.2006
(51) Int. Cl.: B60S 1/38

(54) **DISPOSITIF DE VERROUILLAGE ENTRE UNE LAME D'ESSUYAGE ET UN PORTE-BALAI D'ESSUIE-GLACE**
ARRETIERUNG ZWISCHEN EINEM WISCHBLATT UND SCHEIBENWISCHERARM
LOCKING DEVICE BETWEEN A WIPER BLADE AND A WINDSCREEN WIPER BLADE ARM

(30) Priorité: 13.09.2005 FR 0509319
(43) Date de publication de la demande: 28.05.2008
(73) Titulaire: VALEO SYSTEMES D'ESSUYAGE, 78321 La Verrière (FR)
(72) Inventeur: BOUSSICOT, Frédéric, F-78700 Conflans Sainte Honorine (FR); JARASSON, Jean-Michel, F-78990 Elancourt (FR); CAILLOT, Gérald, F-78320 Le Mesnil Saint-Denis (FR)
(74) Mandataire: Rosolen-Delarue, Katell
(86) Numéro de dépôt international: PCT/EP2006/008843
(87) Numéro de publication internationale: WO 2007/031260

(56) Documents cités:
- EP-A- 0 646 507
- DE-A1- 10 008 272
- DE-A1- 10 245 693
- GB-A- 2 336 293
- US-A1- 2004 200 026
- PATENT ABSTRACTS OF JAPAN vol. 1998, no. 05, 30 avril 1998 (1998-04-30) -& JP 10 024806 A (MARUENU KK), 27 janvier 1998 (1998-01-27)

## Description

La présente invention concerne un balaie d'essuie-glace avec un dispositif de verrouillage entre une lame d'essuyage et un porte-balai d'essuie-glace.

DE10008272 décrit un dispositif de verrouillage entre un porte-balai et une lame d'essuie-glace.

Les bras d'essuie-glace, notamment de véhicules automobiles, sont couramment constitués d'un bras d'entraînement mobile apte à déplacer un balai d'essuyage comprenant une monture support ou porte-balai d'essuyage et une lame d'essuyage apte à être plaquée contre une vitre ou un pare-brise.

Toutefois, du fait de l'utilisation du balai d'essuie-glace, la lame d'essuyage s'use et il convient de la changer régulièrement.

Par ailleurs, il est nécessaire de solidariser de manière simple et fiable le porte-balai à la lame d'essuie-glace tout en prévoyant la possibilité d'un remplacement simple de la lame.

De plus, il serait particulièrement intéressant de réaliser des moyens de verrouillage entre la lame et le porte-balai à moindre coût et permettant d'assurer une liaison certaine entre la lame et le porte-balai.

Des solutions ont déjà été proposées dans l'art antérieur dans ce but.

Ainsi, selon US 6 253 412, il est réalisé un dispositif de verrouillage comportant au moins une patte avec un crochet, cette au moins une patte étant apte à être disposée contre les bords latéraux de la monture support de la lame d'essuyage et à s'insérer dans des extrémités en forme de pinces supportant la monture support, les extrémités en forme de pince faisant partie d'une armature reliée à un bras d'entraînement du balai d'essuie-glace.

Ce principe de verrouillage de la monture support avec la lame d'essuie-glace est repris sous des formes différentes dans les brevets US 6 112 365 et EP 0 943 511.

Toutefois, il n'est pas suggéré dans cet art antérieur comment réaliser un dispositif de verrouillage apte à relier et verrouiller une monture support et une lame d'essuie-glace quand le balai d'essuie-glace est sous une forme différente, c'est-à-dire quand le balai est entraîné par un bras d'entraînement directement fixé par des moyens de connexion fixés sur la partie médiane de la monture support.

Ainsi, la présente invention s'applique plus particulièrement pour des balais d'essuie-glace dits de type plat ou « flat blade », c'est-à-dire des balais ne présentant pas une armature reliée aux deux extrémités de la monture support, mais présentant uniquement un point de connexion avec un bras d'entraînement au niveau de leur partie médiane.

Les modes de réalisation selon l'art antérieur ne sont pas utilisables pour ce type de balai d'essuie-glace.

Il serait donc particulièrement avantageux de réaliser un dispositif de verrouillage pour ce type de balai d'essuie-glace, facilement remplaçable, fabricable à moindre coût et non encombrant d'un point de vue aussi bien physique qu'esthétique.

La présente invention porte sur un balai selon la revendication 1

De manière avantageuse, le dispositif de verrouillage présente des moyens de blocage sur la lame soit sous la forme d'au moins une dent apte à s'enfoncer partiellement dans la lame, soit sous la forme d'au moins une dent apte à s'engager dans une fente prévue dans la lame.

Afin de permettre le blocage du dispositif de verrouillage sur la lame, le dispositif est réalisé en un matériau métallique.

Avantageusement, le dispositif est solidarisé de manière inamovible soit avec la lame, soit avec ladite lame et les moyens de liaison.

Afin de permettre le remplacement de la lame, les moyens de liaison présentent soit des moyens de désolidarisation aptes à désolidariser l'ensemble solidaire lame / dispositif de verrouillage / moyens de liaison de la vertèbre, soit des moyens de désolidarisation aptes à désolidariser l'ensemble solidaire lame / dispositif de verrouillage de la vertèbre et des moyens de liaison, les moyens de désolidarisation se présentant sous la forme d'au moins un bouton poussoir.

Afin de permettre la solidarisation de la vertèbre avec les moyens de liaison, la vertèbre est maintenue dans l'évidement interne à l'aide de moyens d'accrochage sous la forme d'une languette flexible comportant une extrémité en crochet.

Afin d'éviter l'entrée de matières étrangères dans les moyens de liaison, le dispositif.selon l'invention comporte une paroi transversale apte à obturer l'évidement interne.

Selon un mode de réalisation de l'invention, le dispositif est surmoulé par les moyens de liaison et se présente sous la forme d'une plaque comportant une paire de griffes apte à s'enfoncer dans la lame, la plaque étant apte à être plaquée dans l'évidement interne.

Selon un mode de réalisation alternatif, le dispositif selon l'invention se présente sous la forme générale d'un parallélépipède creux constitué d'une paroi supérieure, de deux parois latérales et de deux parois inférieures, chaque paroi latérale présentant une protubérance apte à bloquer le dispositif dans les moyens de liaison.

Selon une forme de réalisation alternative, chaque paroi latérale présente une patte de verrouillage flexible apte à bloquer ledit dispositif dans lesdits moyens de liaison, au moins un bouton poussoir, prévu dans les moyens de liaison, étant apte à venir plaquer la patte de verrouillage sur la paroi latérale afin de désolidariser le dispositif selon l'invention des moyens de liaison.

Selon l'invention, le dispositif est apte à être inséré dans un décrochement de matière prévu dans les moyens de liaison de manière à former une partie des parois formant l'espace libre.

De manière avantageuse ou alternative; un ergot est prévu sur les moyens de liaison apte à désolidariser la vertèbre des moyens d'accrochage sous la forme de la languette flexible.

Selon de nouveau un mode de réalisation alternatif de l'invention, le dispositif présente des moyens d'accrochage sur les moyens de liaison sous la forme d'un crochet insérable dans un orifice prévu dans les moyens de liaison, le dispositif présentant une paroi transversale de forme complémentaire à un décrochement prévu dans les moyens de liaison, l'extrémité en crochet du crochet étant apte à s'accrocher sur une paroi latérale des moyens de liaison, le bouton-poussoir étant apte à pivoter de manière telle qu'il décroche l'extrémité en crochet de la paroi latérale des moyens de liaison.

La présente invention est maintenant décrite à l'aide d'exemples uniquement descriptifs et nullement limitatifs de la portée de la présente invention, et à l'aide des illustrations ci-jointes dans lesquelles :
- La figure 1 est une vue en perspective d'une monture support de type connue en soi apte à être associée à une lame d'essuie-glace et à des moyens de connexion aptes à être reliés à un bras d'entraînement ;
- La figure 2 est une vue en perspective d'une lame d'essuie-glace et du dispositif de verrouillage du balai selon l'invention avant sa solidarisation sur la lame ;
- Les figures 3 et 4 sont respectivement des vues frontales et en perspective du dispositif de verrouillage du balai selon l'invention solidarisé et fixé sur la lame d'essuie-glace;
- La figure 5 est une vue en coupe des moyens de liaison entre le dispositif de verrouillage du balai selon l'invention, la lame d'essuie-glace et la monture support ;
- Les figures 6 et 7 sont, respectivement, des vues en perspective des moyens de liaison de la figure 5 avant et après leur solidarisation avec le dispositif de verrouillage du balai selon l'invention ;
- Les figures 8 et 9 sont, respectivement, des vues en coupe longitudinale des moyens de liaison de la figure 5 avant et après leur solidarisation avec le dispositif de verrouillage du balai selon l'invention ;
- La figure 10 est une vue en coupe supérieure du dispositif de verrouillage du balai selon l'invention associé aux moyens de liaison selon la figure 5 ;
- La figure 11. est une vue en perspective d'une seconde forme de réalisation d'un dispositif de verrouillage du balai selon l'invention, dans ce cas ;
- Les figures 12 et 13 sont respectivement des vues en perspective du dispositif de verrouillage du balai selon la seconde forme de réalisation solidarisé avec les moyens de liaison entre la lame d'essuie-glace et la monture support, avant et après leur solidarisation avec la lame d'essuie-glace ;
- La figure 14 est une vue en coupe transversale des moyens de liaison solidarisés avec le dispositif de verrouillage du balai selon la seconde forme de réalisation de l'invention ;
- Les figures 15 et 16 sont respectivement des vues en perspective d'une troisième forme de réalisation du dispositif de verrouillage du balai selon l'invention avant et après sa solidarisation avec des moyens de liaison entre la lame d'essuie-glace et la monture support ;
- La figure 17 est une vue inférieure des moyens de liaison fixés sur la lame d'essuie-glace selon la troisième forme de réalisation de l'invention ;
- Les figures 18 et 19 sont des vues en perspective d'une forme de réalisation alternative de la troisième forme de réalisation du dispositif de verrouillage avant et après insertion dans les moyens de liaison ;
- La figure 20 est une vue en perspective d'une quatrième forme de réalisation d'un dispositif de verrouillage du balai selon l'invention avant son montage sur des moyens de liaison entre la lame d'essuie-glace et la monture support ;
- La figure 21 est une vue en perspective de l'étape d'assemblage des moyens de liaison sur la monture support et la vertèbre d'un balai d'essuie-glace ;
- La figure 22 est une vue partielle en perspective de la lame d'essuie-glace apte à coopérer avec le dispositif de verrouillage selon la quatrième forme de réalisation de l'invention ;
- Les figures 23 et 24 représentent deux vues en perspective de l'étape d'insertion de la lame d'essuie-glace dans les moyens de liaison selon la quatrième forme de réalisation de l'invention ;
- La figure 25 est une vue en coupé au niveau du dispositif de verrouillage des moyens de liaison selon la quatrième forme de réalisation de l'invention ;
- La figure 26 est une vue en perspective d'une forme de réalisation alternative des moyens de liaison aptes à se solidariser avec le dispositif de verrouillage du balai selon la quatrième forme de réalisation de l'invention;
- Les figures 27 et 28 représentent deux vues en perspective, respectivement avant et après insertion de la lame d'essuie-glace dans la forme de réalisation alternative des moyens de liaison selon la quatrième forme de réalisation du dispositif de verrouillage du balai selon l'invention ;
- La figure 29 est une vue inférieure de la forme de réalisation alternative des moyens de liaison aptes à coopérer avec la quatrième forme de réalisation du dispositif de verrouillage du balai selon l'invention ;
- La figure 30 est une vue en perspective d'une cinquième forme de réalisation du dispositif de verrouillage du balai selon l'invention ;
- La figure 31 est une vue en coupe transversale des moyens de liaison selon la cinquième forme de réalisation de l'invention entre la lame d'essuie-glace et la monture support, et
- Les figures 32 à 34 sont des vues en coupe planaire longitudinale montrant les trois étapes successives de désolidarisation du dispositif de verrouillage des moyens de liaison selon la cinquième forme de réalisation de l'invention.

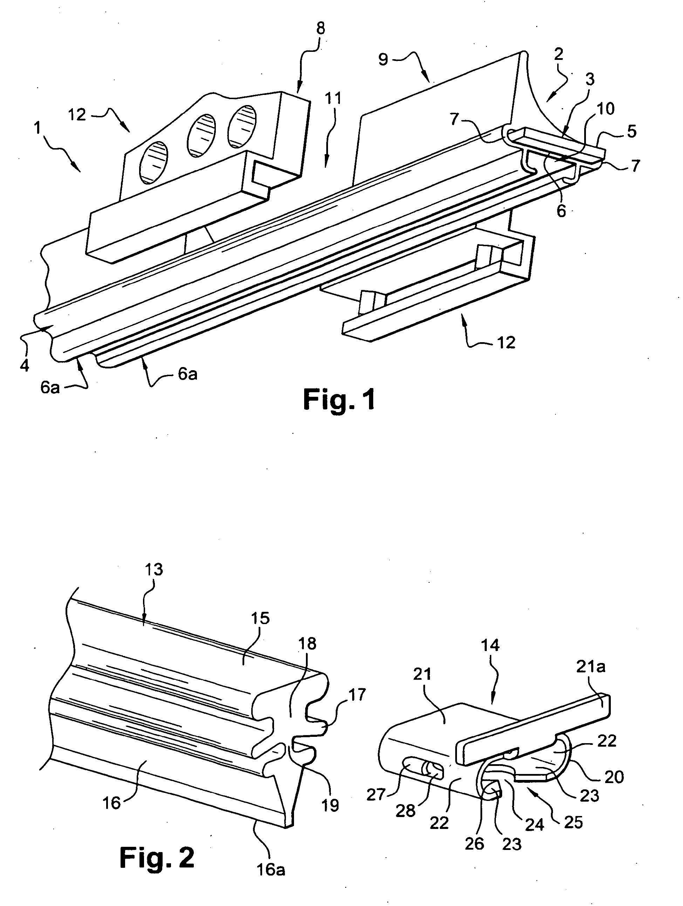

La figure 1 représente un balai d'essuie-glace de numéro de référence 1, avantageusement de type connu en soi sous l'appellation « flat blade »_{,} comportant un porte-balai ou une monture support 2 sensiblement longitudinale.

La monture support 2 est constituée d'une vertèbre interne 3 conformée comme une lame horizontale longitudinale insérée dans un corps central tubulaire 4 d'axe principal sensiblement longitudinal délimité par une paroi supérieure horizontale 5, une paroi inférieure horizontale 6 et deux parois latérales longitudinales verticales 7.

Dans la suite de la description, il est entendu par « direction longitudinale » ou « direction horizontale » une direction parallèle à l'axe longitudinal de la lame d'essuie-glace et par « direction transversale » ou « direction verticale » une direction perpendiculaire à l'axe longitudinal de la vertèbre interne et situé dans un plan confondu avec la vertèbre interne 3.

Des moyens de connexion 8 sont prévus pour connecter le balai d'essuie-glace 1 à un bras d'entraînement (non représenté sur la figure mais de type connu en soi).

Il est prévu sur la surface externe de la paroi supérieure 5 du corps central 4 une nervure supérieure 9 dirigée verticalement de manière ascendante.

De manière avantageuse, la nervure supérieure 9 est conformée de manière à produire des forces d'appui du balai d'essuie-glace 1 sur la surface de la vitre ou du pare-brise, de par l'action du vent relatif lors du déplacement du véhicule, permettant de ce fait une meilleure adhérence de la raclette ou lame d'essuyage sur la vitre ou le pare-brise.

Il est également prévu sur la paroi inférieure 6 du corps central 4 des moyens d'accrochage d'une raclette ou lame d'essuyage 13 sous la forme d'une paire de crochets longitudinaux opposés 6a dirigés l'un vers l'autre et formant un espace intérieur 10 ouvert dans lequel la tête d'une lame 13 peut être insérée.

La nervure supérieure 9 présente un décrochement 11 dans lequel les moyens de liaison ou connecteur 8 sont montés sur la monture support 2.

Le connecteur 8 est réalisé en deux pièces identiques symétriques 12 et est avantageusement monté dans la partie centrale de la monture support 2 en recouvrant la paroi supérieure 5 du corps principal 4 ainsi que les deux parois latérales 7.

La figure 2 représente une vue en perspective d'une lame d'essuie-glace 13 et du dispositif de verrouillage 14 selon l'invention avant sa solidarisation sur la lame 13.

La lame d'essuyage 13 est de type connue en soi et se compose avantageusement de :
- une partie dite « supérieure » 15 sous la forme d'un élément longitudinal présentant une coupe transversale sensiblement rectangulaire avec les quatre coins arrondis ;
- une partie dite « inférieure » 16 sous la forme d'un élément longitudinal présentant une coupe transversale triangulaire, avantageusement sous la forme d'un triangle isocèle dont la pointe 16a est directement en contact avec la vitre ou le pare-brise devant être essuyé, et
- une partie intermédiaire 17 sous la forme d'un élément longitudinal présentant une coupe transversale en arc de cercle dont les deux extrémités sont dirigées vers la partie inférieure 16.

Les parties supérieure 15 et intermédiaire 17 sont reliées entre elles par un élément de liaison dit supérieur 18, sensiblement longitudinal, et les parties intermédiaire 17 et inférieure 16 sont reliées également entre elles par un élément de liaison dit inférieur 19, sensiblement longitudinal.

Le dispositif de verrouillage: 14 selon la première forme de réalisation de l'invention se présente sous la forme générale d'un parallélépipède creux 20 dont les coins sont arrondis et qui est forme complémentaire et de dimensions légèrement supérieures aux dimensions de la partie supérieure 15 de la lame d'essuie-glace 13.

De manière plus précise, le parallélépipède creux 20 est constitué d'une paroi supérieure 21 sensiblement horizontale, de deux parois latérales 22 et de deux parois inférieures 23.

Le dispositif de verrouillage 14 est avantageusement réalisé en un matériau métallique tandis que la lame d'essuie-glace 13 est avantageusement réalisée en caoutchouc.

Les parois inférieures 23 sont séparées l'une de l'autre par un espace 24 dans lequel est apte à s'insérer par coulissement l'élément de liaison supérieur 18.

Avantageusement, l'extrémité libre de chaque paroi inférieure 23 présente des moyens de blocage 25 sur la lame 13 sous la forme d'une pluralité de dents 26 apte à comprimer l'élément de liaison supérieur 18 de la lame 13.

De plus, chaque paroi latérale 22 comporte une protubérance 27 et un orifice 28 dont les fonctionnalités seront explicitées ultérieurement.

Avant montage du parallélépipède creux 20 sur la lame de caoutchouc 13, les parois latérales 22 sont d'origine légèrement inclinées (ouvertes) par rapport à une perpendiculaire à la paroi supérieure 21( « ouverture » de zone inférieure), pour ainsi faciliter le glissement et la solidarisation du parallélépipède 20 sur la lame 13.

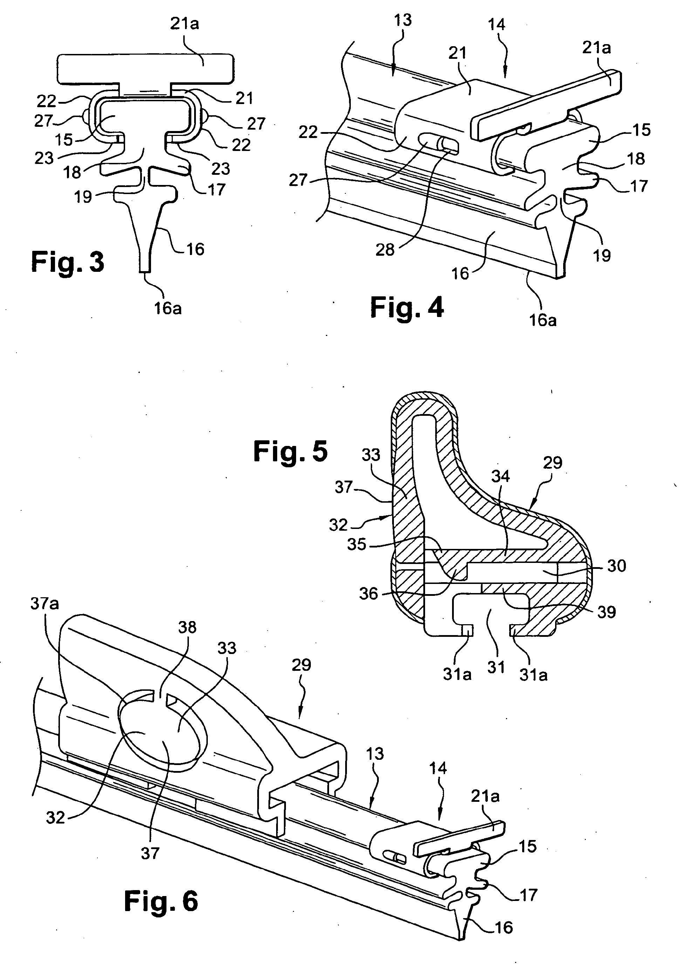

Les figures 3 et 4 sont respectivement des vues frontales et en perspectives du dispositif 14 une fois que celui-ci a été fixé sur la partie supérieure 15 de la lame 13.

Afin de fixer le dispositif 14 sur la lame 13 et après solidarisation du dispositif 14 sur la lame 13, l'utilisateur doit exercer une pression sur les parois latérales 22 du dispositif 14 pour resserrer et enfoncer plus ou moins fortement les moyens de blocage 25 sous forme de dents 26 dans l'élément de liaison supérieur 18, les parois latérales 22 se trouvant après cette opération de serrage dans une position sensiblement verticale.

Le dispositif de verrouillage 14 est avantageusement réalisé en un matériau métallique légèrement déformable de manière telle que l'utilisateur puisse rapprocher les parois latérales 22 l'une de l'autre une fois le dispositif 14 placé sur la partie supérieure 15 de la lame 13, permettant ainsi la pénétration des dents 26 dans l'élément de liaison supérieur 18.

Il est bien entendu que cette opération de solidarisation est réalisable du fait des matériaux utilisés pour réaliser la lame 13 (en caoutchouc) et le dispositif du balai selon l'invention 14 (en un matériau métallique).

Une fois cette opération effectuée, il n'est plus possible de désolidariser le dispositif de verrouillage 14 de la lame 13, sans endommager la lame 13.

La paroi supérieure 21 du dispositif de verrouillage 14 présente une paroi transversale 21 a sensiblement verticale disposée sur un des bords de la paroi supérieure 21, avantageusement le bord de la paroi supérieure 21 le plus proche de l'extrémité de la lame caoutchouc 13 une fois que le dispositif de verrouillage 14 a été placé sur cette lame 13.

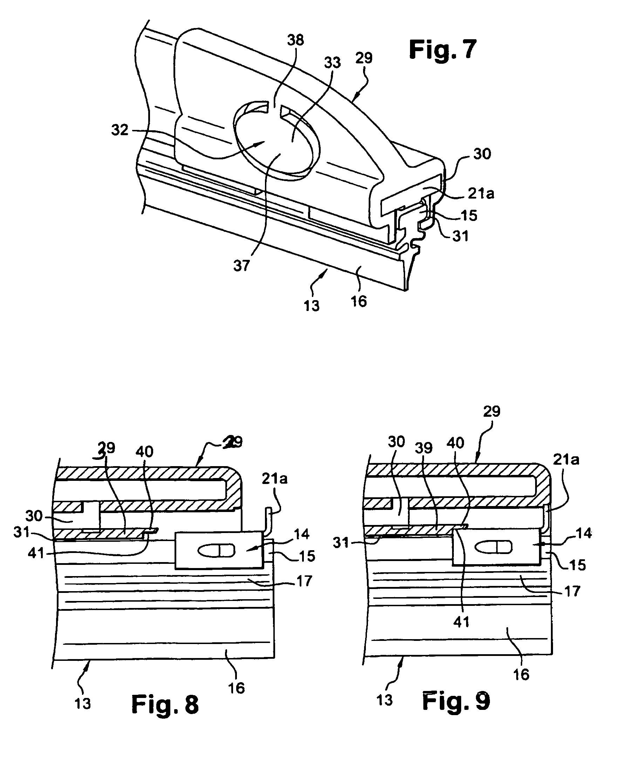

La figure 5 est une vue en coupe des moyens de liaison 29 entre le dispositif de verrouillage 14 selon l'invention et la monture support 2, les figures 6 et 7 étant, respectivement, des vues en perspective de ces moyens de liaison 29 avant et après leur solidarisation avec le dispositif de verrouillage 14.

De manière usuelle, les moyens de liaison 29 sont usuellement appelés « end-clips » par l'homme de l'art et sont constitués d'un évidement interne 30 dans lequel est apte à être inséré la vertèbre 3 et d'un espace libre 31 dans lequel la partie supérieure 15 de la lame 13 est apte à être insérée.

De manière avantageuse, le dispositif de verrouillage 14 est également apte à être inséré dans les moyens de liaison 29.

Les moyens de liaison 29 présentent également des moyens de désolidarisation 32 de la vertèbre 3 sous la forme d'un bouton poussoir 33 apte à exercer une pression sur une languette interne 34 flexible intégrée dans les moyens de liaison 29, la languette flexible 34 présentant une extrémité libre 35 avec un crochet 36 apte à maintenir la vertèbre 3 quand celle-ci est insérée dans l'évidement interne 30.

De manière plus précise, le bouton poussoir 33 est constitué d'une paroi 37 délimitée par une rainure 37a et ne présentant qu'un seul point de liaison 38 avec le reste des moyens de liaison 29.

Ainsi, quand l'utilisateur appuie sur le bouton poussoir 33, l'unique point de liaison 38 formant un axe de pivotement, alors la paroi 37 constitutive de ce bouton 33 pivote légèrement vers l'intérieur des moyens de liaison 29.

De cette manière, la paroi 37 (coté interne) vient avantageusement en butée contre l'extrémité libre 35 de la languette flexible 34 et entraîne ainsi son élévation partielle.

De cette façon, le crochet 36 ne maintient plus la vertèbre 3 et celle-ci peut être désolidarisée des moyens de liaison 29.

Les figures 8 et 9 sont, respectivement, des vues en coupe longitudinale des moyens de liaison 29 avant et après leur solidarisation avec le dispositif de verrouillage 1.4.

Il peut ainsi être remarqué que l'évidement interne 30 et l'espace libre 31 des moyens de liaison 29 sont confondus au niveau de l'extrémité de la lame d'essuie-glace 13 au niveau de la zone de la lame 13 sur laquelle est fixé le dispositif de verrouillage 14, quand celui-ci est inséré dans les moyens de liaison 29.

Avantageusement, l'évidement interne 30 et l'espace libre 31 sont séparés par une paroi longitudinale 39, l'extrémité libre 40 de cette paroi 39 étant apte à s'accoler contre un bord de la paroi supérieure 21 du dispositif de verrouillage 14, et plus précisément sur le bord opposé au bord sur lequel est fixé la paroi transversale 21a.

Plus précisément, une fois la lame d'essuie-glace 14 insérée dans l'espace libre 31, alors le bord libre (c'est-à-dire sans la paroi transversale 21a) de la paroi supérieure 21 s'engage dans l'extrémité libre 40 de la paroi 39 dans un décrochement 41 prévu pour bloquer le dispositif 14.

De cette manière, le dispositif de verrouillage 14 est bloqué sur la lame d'essuie-glace 13 et aucun mouvement vertical de ce dispositif 14 n'est possible.

Il peut être également remarqué à partir des figures 7 à 9 que la paroi transversale 21 a est de forme complémentaire à l'évidement interne 30.

Ainsi, quand la lame d'essuie-glace 13 et le dispositif de verrouillage 14 sont totalement insérés dans les moyens de liaison 29, alors la paroi transversale 21 a ferme l'évidement interne 30, permettant ainsi d'éviter que des matières étrangères, par exemple des poussières ou de l'eau, entrent dans les moyens de liaison 29 et provoquent un encrassement ou une corrosion de ceux-ci, et améliore fortement l'esthétique de l'ensemble, l'ouverture n'étant plus visible.

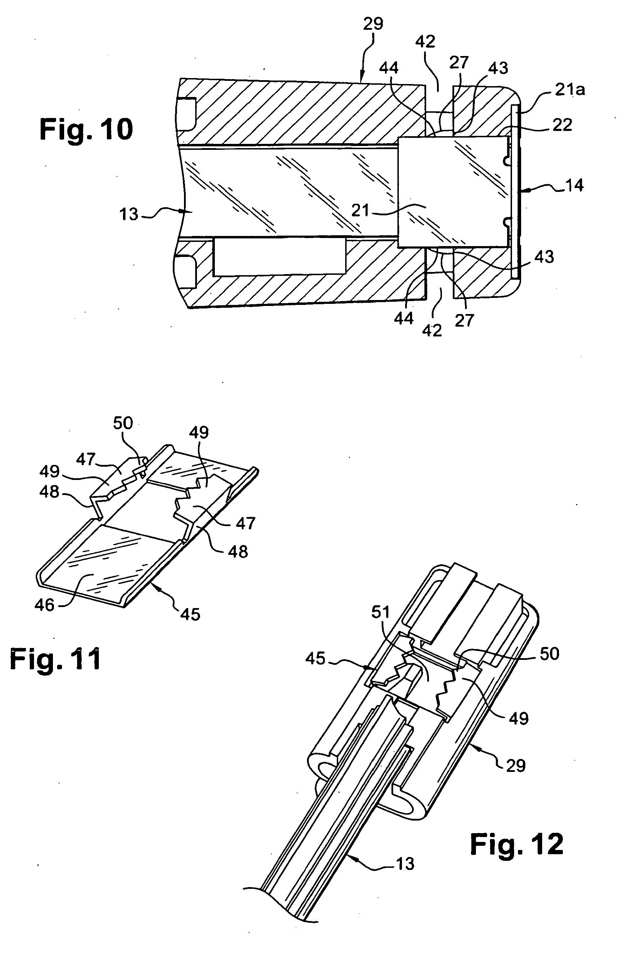

La figure 10 est une vue en coupe supérieure du dispositif de verrouillage 14 associé aux moyens de liaison 29.

Il peut être ainsi remarqué la présence dans les moyens de liaison 29 d'ouvertures 42 dans lesquelles sont aptes à se bloquer les protubérances 27 des parois latérales 22 du dispositif de verrouillage 14.

Selon la vue en coupe de la figure 10, les protubérances 27 présentent avantageusement un bord biseauté droit 43, perpendiculaire à la paroi latérale 22, et un bord en arc de cercle 44, avec une extrémité confondue avec la paroi latérale 22 et l'autre extrémité confondue avec le bord biseauté droit 43.

Une fois le dispositif de verrouillage 14 complètement inséré dans l'espace libre 31, celui-ci est inamovible des moyens de liaison 29 du fait de la présence du bord biseauté droit 43 constituant des moyens de butée entre le dispositif de verrouillage 14 et les moyens de liaison 29.

De cette manière, l'ensemble lame d'essuie-glace 13 / dispositif de verrouillage 14 / moyens de liaison 29 est indémontable et est uniquement désolidarisable de la vertèbre 3 de par la présence du bouton poussoir 33.

Ainsi, si l'utilisateur souhaite remplacer uniquement la lame d'essuie-glace 13 du balai 1, il devra remplacer l'ensemble lame d'essuie-glace 13 /dispositif de verrouillage 14 / moyens de liaison 29.

La figure 11 est une vue en perspective d'une seconde forme de réalisation d'un dispositif de verrouillage 45 du balai selon l'invention.

Dans la suite de la description, les éléments identiques et précédemment décrits porteront les mêmes numéros de référence.

Le dispositif de verrouillage 45 se présente sous la forme générale d'une plaque 46 avantageusement rectangulaire, ajourée, et présentant sur chacun de ses deux bords latéraux une griffe 47 constituée d'une paroi verticale 48 et d'une paroi transversale 49, l'extrémité libre de la paroi transversale 49 présentant des dents 50, avantageusement triangulaires.

Le dispositif de verrouillage 45 est avantageusement réalisé en un matériau métallique.

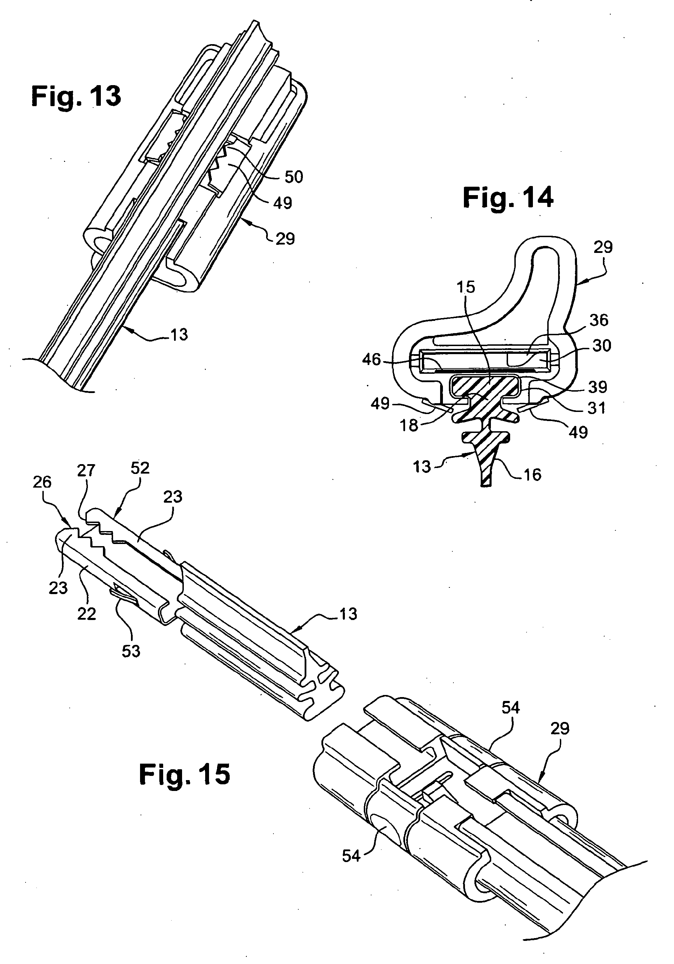

Les figures 12 et 13 sont des vues en perspective du dispositif de verrouillage 45 solidarisé avec les moyens de liaison 29 entre la lame: d'essuie-glace 13 et la monture support 2, respectivement avant et après solidarisation avec la lame d'essuie-glace 13.

Les moyens de liaison 29 sont du même type que les moyens de liaison précédemment décrits, sauf qu'il est prévu de surmouler directement les moyens de liaison 29 sur le dispositif de verrouillage 45.

En effet, les moyens de liaison 29 présentent avantageusement un orifice 51 apte à être traversé par les griffes 47.

La plaque 46 est avantageusement plaquée contre la paroi longitudinale 39 dans l'évidement interne 30, comme cela est illustré de manière plus précise dans la figure 14 qui est une vue en coupe transversale des moyens de liaison 29 solidarisés avec le dispositif de verrouillage 45.

Les dents 50 du dispositif de verrouillage 45 sont avantageusement aptes à pénétrer et à s'encastrer dans l'élément de liaison 18 de la lame d'essuie-glace 13, avantageusement réalisée en caoutchouc, après resserrement ou sertissage, comme précédemment.

De la même manière que précédemment expliqué, selon ce second mode de réalisation de l'invention, si l'utilisateur souhaite uniquement remplacer la lame d'essuie-glace 13, alors il doit exercer une pression sur le bouton poussoir 33 pour désengager les moyens de liaison 29 de la vertèbre interne pour ainsi récupérer l'ensemble solidaire : moyens de liaison 29/lame d'essuie-glace 13/ dispositif de verrouillage 45.

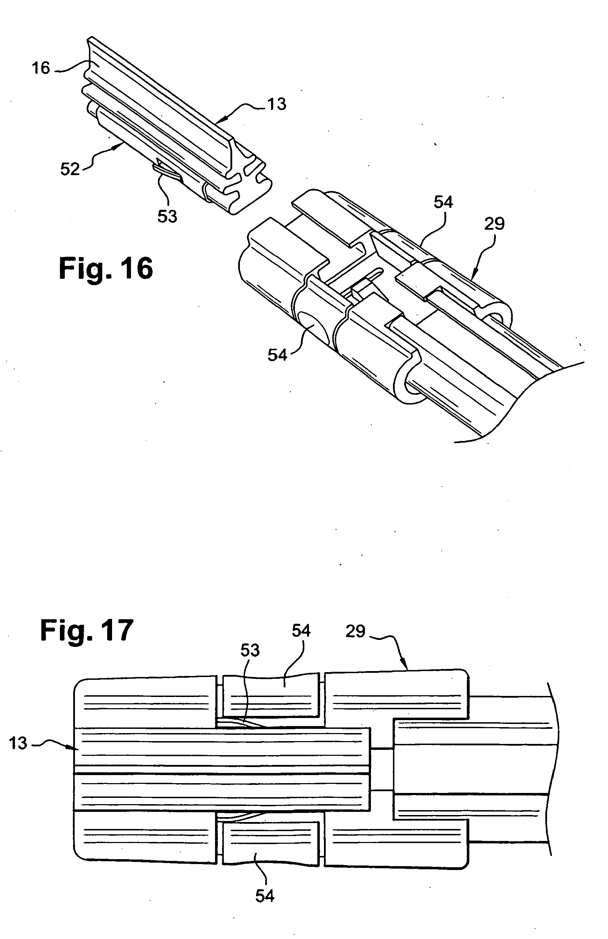

Les figures 15 et 16 sont respectivement des vues en perspective d'une troisième forme de réalisation d'un dispositif de verrouillage 52 avant et après solidarisation avec les moyens de liaison 29 entre la lame d'essuie-glace 13 et la monture support 2.

Le dispositif de verrouillage 52 selon cette troisième forme de réalisation est quasiment identique au dispositif de verrouillage 14 selon la première forme de réalisation à l'exception des protubérances 27 et des orifices 28 qui sont remplacés, selon cette forme de réalisation, par des pattes de verrouillage 53 se présentant sous la forme d'une languette s'écartant légèrement des parois latérales 22 du dispositif de verrouillage 52 à l'une des extrémités de la patte 53, et plus précisément l'extrémité libre écartée des pattes 53 est dirigée vers le bord de la paroi supérieure 21 le plus proche de l'extrémité de la lame 13 quand le dispositif de verrouillage 52 est inséré sur la lame 13 et dans les moyens de liaison 29.

Le dispositif de verrouillage 52 présente une paire de parois inférieures 23 comportant au moins partiellement des moyens de blocage 26 sous la forme de dents 27 aptes à être serties et encastrées dans l'élément de liaison 18 de la lame d'essuie-glace 13.

Les moyens de liaison 29 aptes à coopérer avec le dispositif de verrouillage 52 selon cette troisième forme de réalisation, et tels que représentés selon une vue inférieure dans la figure 17, présentent une paire de boutons-poussoirs 54 aptes à exercer une pression sur les pattes de verrouillage 53 une fois que le dispositif de verrouillage 52 solidarisé avec la lame d'essuie-glace 13 a été inséré dans les moyens de liaison 29 dans l'espace libre 31.

De cette manière, si l'utilisateur souhaite remplacer la lame d'essuie-glace 13, il doit exercer une pression sur les deux boutons-poussoirs 54 et ainsi désengager l'ensemble solidaire lame d'essuie-glace 13/ dispositif de verrouillage 52.

En effet, selon ce mode de réalisation, lors du remplacement de la lame d'essuie-glace 13, les moyens de liaison 29 restent solidarisés avec la vertèbre 3, à la différence de ce qui a été précédemment explicité.

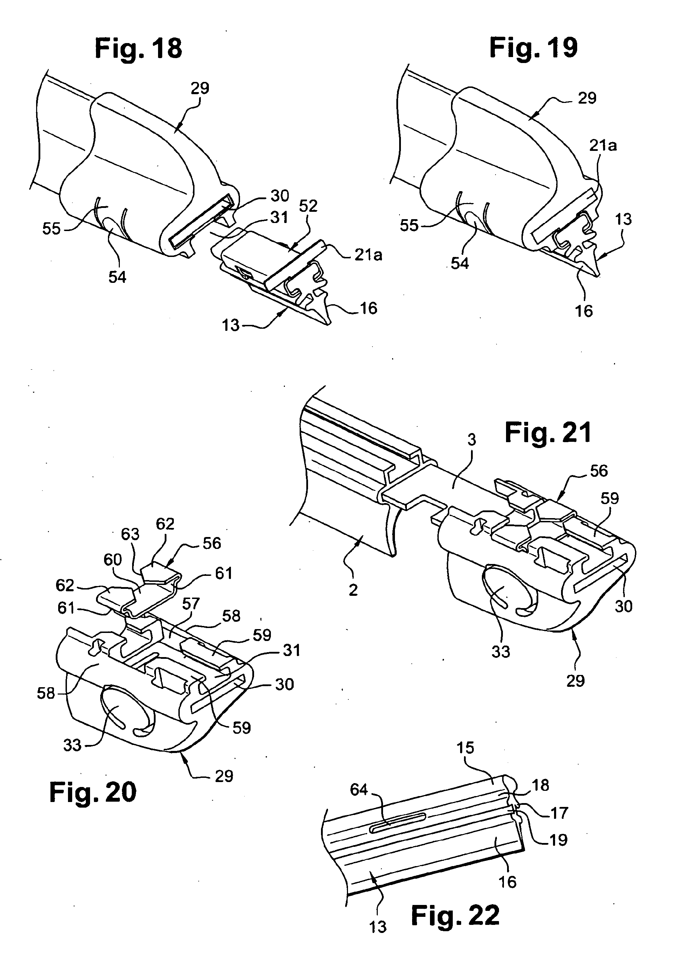

Les figures 18 et 19 sont des vues en perspective d'une forme de réalisation alternative de la troisième forme de réalisation du dispositif de verrouillage 52 avant et après insertion dans les moyens de liaison 29.

Il est ainsi vu, à partir des figures 18 et 19, la forme de réalisation particulière des boutons-poussoirs 54 formés à partir d'un découpage des bords latéraux des moyens de liaison 29 de manière à laisser uniquement un bord formant charnière 55 permettant ainsi d'exercer une pression sur les boutons 54, de les déformer légèrement par pivotement autour de ce bord formant charnière 55, d'appuyer ainsi sur les pattes de verrouillage 53, de les plaquer contre les parois latérales 22 du dispositif de verrouillage 52 et ainsi de désolidariser l'ensemble lame 13/ dispositif de verrouillage 52 des moyens de liaison 29.

Il peut également être remarqué la présence sur le dispositif de verrouillage 52 d'une paroi transversale 21a de forme complémentaire à l'évidement interne 30 afin d'empêcher l'entrée de matières étrangères dans les moyens de liaison, 29.

De manière supplémentaire, la paroi transversale 21 a est réalisée légèrement inclinée par rapport à la verticale et dirigée vers le bord libre de la paroi supérieure 21, de manière à ce que, lors du déverrouillage des pattes de verrouillage 53, la paroi transversale 21a exerce une pression sur les bords internes de l'évidement 30 et entraîne une légère avancée de l'ensemble lame d'essuie-glace 13/ dispositif de verrouillage 52 hors de l'évidement interne 30.

De cette manière, l'utilisateur sait s'il a correctement appuyé sur les boutons-poussoirs 54 et si le dispositif de verrouillage 52 est bien déverrouillé des moyens de liaison 29.

La figure 20 est une vue en perspective d'une quatrième forme de réalisation d'un dispositif de verrouillage 56 avant son montage sur les moyens de liaison 29 entre la lame d'essuie-glace 13 et la monture support 2.

Selon ce mode de réalisation, les moyens de liaison 29 présentent au niveau de l'espace libre 31 un décrochement de matière 57 constitué d'une ouverture 58 dans chaque paroi latérale 59 constitutive de l'espace libre 31.

Le dispositif de verrouillage 56 est apte à être inséré dans le décrochement de matière 57 et à combler les ouvertures 58 des parois latérales 59.

De manière plus précise, le dispositif de verrouillage 56 est constitué d'une paroi supérieure 60, de deux parois latérales 61 et de deux parois inférieures 62 dont l'extrémité libre présente au moins une dent 63 apte à être en contact avec la lame d'essuie-glace 13, une fois que la lame 13 a été insérée dans l'espace libre 31 et que les 2 dents 63 des parois inférieures 62 ont été resserrées l'une vers l'autre.

La figure 21 est une vue en perspective de l'étape d'assemblage des moyens de liaison 29 sur la monture support 2 et d'insertion de la vertèbre 3 d'un balai d'essuie-glace 1 dans l'évidement interne 30.

De manière générale, les moyens de liaison 29 présentent un bouton poussoir 33, tel que précédemment décrit, et permettant la désolidarisation de la vertèbre 3 des moyens de liaison 29.

Selon ce mode de réalisation et telle qu'illustrée à la figure 22, la lame en caoutchouc 14 présente une fente 64, avantageusement longitudinale; dans l'élément de liaison 18 entre la partie supérieure 15 et la partie intermédiaire 17 de la lame d'essuie-glace 13.

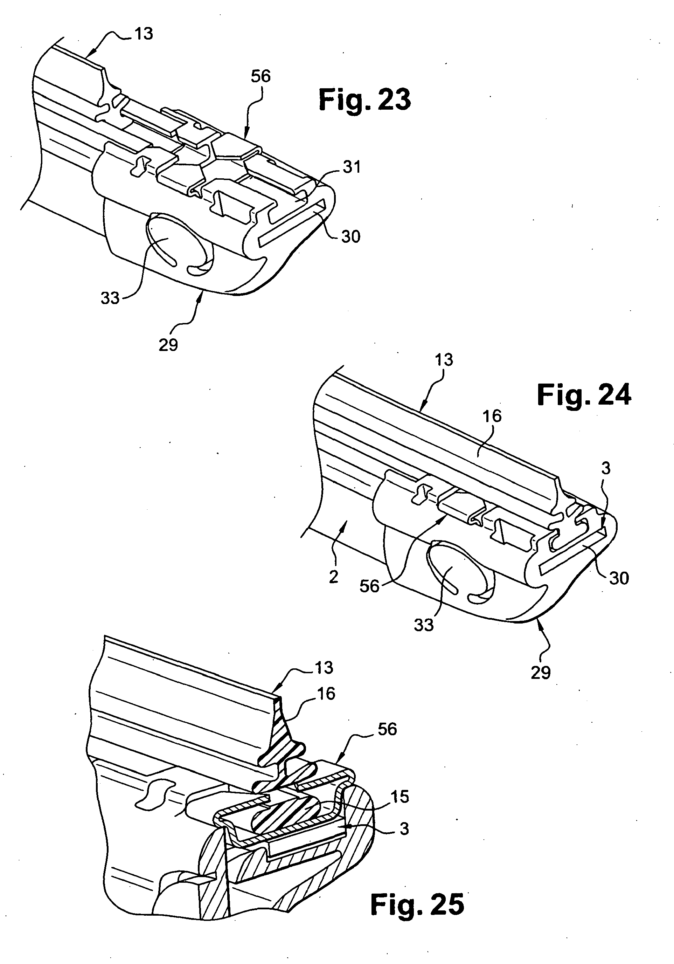

De cette manière, lors de l'insertion de la lame d'essuie-glace 13 dans l'espace libre 31, et tel que représenté dans les figures 23 et 24, la lame 13 est solidarisé du dispositif de verrouillage 56 par insertion par serrage des dents 63 des parois inférieures 62 dans la fente 64.

De manière alternative, il est également possible de prévoir une lame d'essuie-glace 13 sans fente 64, le sertissage et la solidarisation de la lame 13 avec les moyens de liaison se faisant alors par pénétration des dents 63 dans l'élément de liaison 18 entre la partie supérieure 15 et la partie intermédiaire 17 de la lame d'essuie-glace 13.

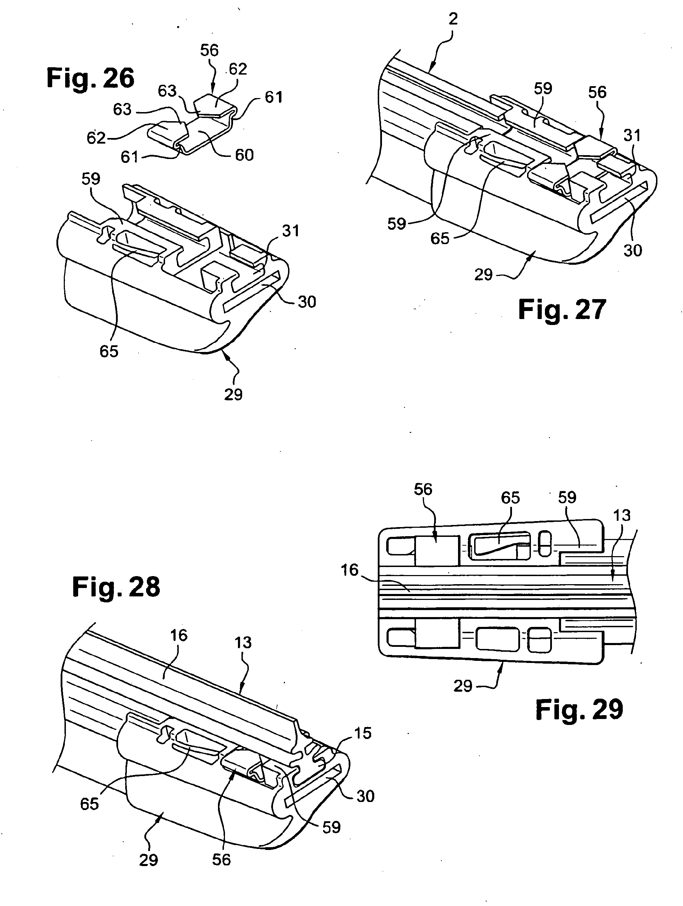

De manière alternative, le dispositif de verrouillage 56, selon la quatrième forme de réalisation, est apte à se solidariser dans des moyens de liaison 29 tels que représentés dans les figures 26 à 29.

Selon ce mode de réalisation alternatif, les moyens de liaison 29 présentent au niveau d'une des parois latérales 59 constitutives de l'espace libre 31 un ergot 65.

Avantageusement, l'ergot 65 est réalisé en un matériau flexible (idem end-clip car même pièce) et est apte à bloquer la vertèbre 3 dans les moyens de liaison 29.

De manière supplémentaire, les moyens de liaison 29 selon ce mode de réalisation ne présentent pas de bouton poussoir 33. L'utilisateur exerce une pression par basculement de l'ergot 65, par exemple à l'aide d'une pointe d'un outil du type tournevis.

Du fait de l'absence de bouton poussoir 33, il est obtenu un gain de place à l'intérieur des moyens de liaison 29 permettant de réduire la taille de la monture support 2.

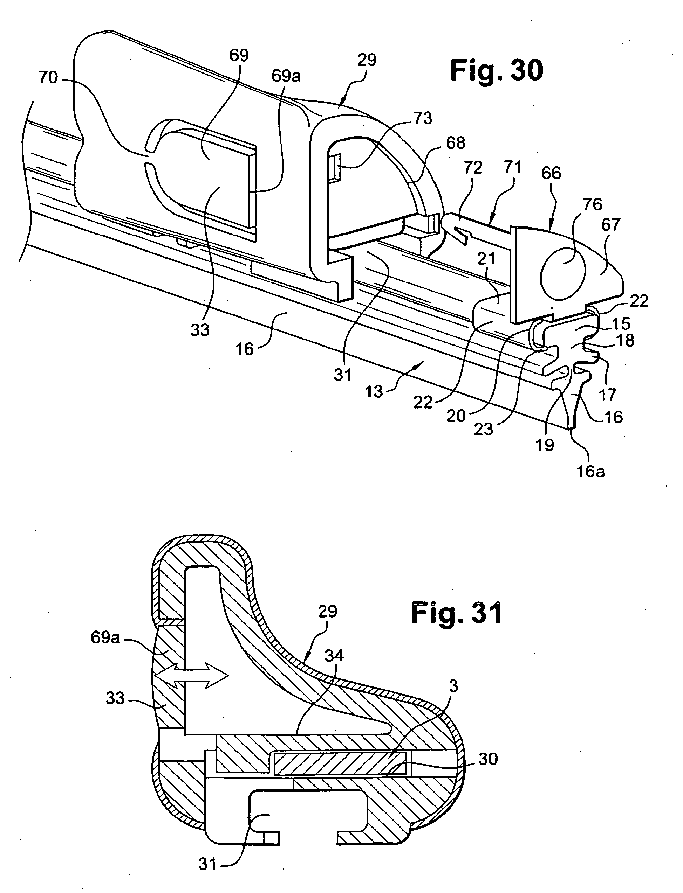

La figure 30 est une vue en perspective d'une cinquième forme de réalisation du dispositif de verrouillage 66 fixé sur une lame d'essuie-glace 13 et avant solidarisation avec les moyens de liaison 29, illustrés en vue de coupe dans la figure 31.

Le dispositif de verrouillage 66 est du même type que le dispositif de verrouillage 14 selon la première forme de réalisation, à savoir qu'il se présente sous la forme générale d'un parallélépipède creux 20 dont les coins sont arrondis et qui est de forme complémentaire et de dimensions légèrement supérieures aux dimensions de la partie supérieure 15 de la lame d'essuie-glace 13.

Plus précisément, le parallélépipède creux 20 est constitué d'une paroi supérieure 21 sensiblement horizontale, de deux parois latérales 22 sensiblement verticales et de deux parois inférieures 23.

La paroi supérieure 21 du dispositif de verrouillage 66 présente une paroi transversale 67 sensiblement verticale disposée sur un bord de la paroi supérieure 21, avantageusement le bord de la paroi supérieure 21 le plus proche de l'extrémité de la lame caoutchouc 13 une fois que le dispositif de verrouillage 66 a été insérée dans cette lame 13.

La paroi transversale 67 est apte à s'encastrer totalement dans les moyens de liaison 29 et, de manière plus précise, la paroi transversale 67 est de forme complémentaire à un creusement 68 prévu dans les moyens de liaison 29.

Le bouton poussoir 33 selon ce mode de réalisation alternatif des moyens de liaison 29 est constitué d'une paroi 69, en forme de U, reliée aux moyens de liaison 29 uniquement par un point de fixation 70, au niveau du fond du U, formant un axe de pivotement quand l'utilisateur exerce une pression sur la paroi 69.

Plus précisément, le point de fixation 69 est situé de manière telle que l'extrémité libre 69a de la paroi 69, c'est-à-dire le bord reliant les deux branches du U, soit sensiblement transversale par rapport à l'axe longitudinal de la lame 13.

Il est indiqué sur la figure 31 par une flèche le sens de déplacement de la paroi 69.

La paroi transversale 67 de la paroi supérieure 21 du dispositif de verrouillage 66 présente sur sa surface destinée à être en contact avec le décrochement 68 des moyens de fixation 71 sur les moyens de liaison 29, les moyens de fixation 71 se présentant sous la forme d'un crochet 72.

Le creusement 68 présente un orifice 73 dans lequel est apte à s'insérer le crochet 72.

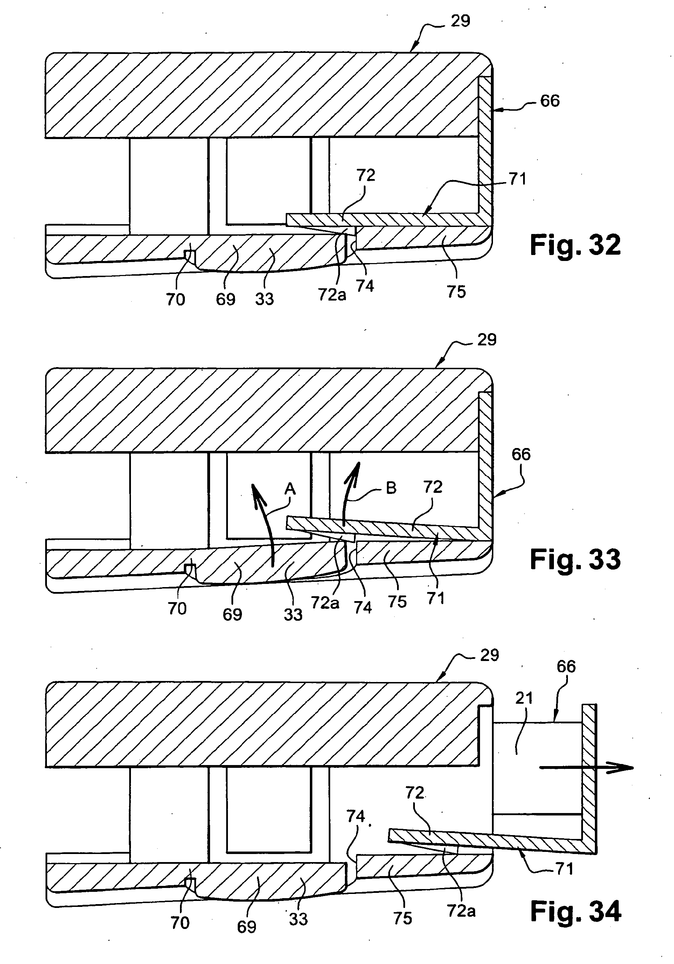

Les figures 32 à 34 sont des vues en coupe planaire longitudinale montrant les étapes de désolidarisation du crochet 72 des moyens de liaison 29.

Il peut ainsi être vu qu'une fois le crochet 72 et le dispositif de verrouillage 66 placés dans le décrochement 68; l'extrémité 72a du crochet 72 est en appui contre le bord 74 de la paroi latérale 75 des moyens de liaison 29, paroi latérale 75 dans laquelle est formé le bouton poussoir 33.

De cette manière; le crochet 72 n'autorise aucun déplacement longitudinal du dispositif de verrouillage 66 et empêche la désolidarisation de ce dispositif 66 d'avec les moyens de liaison 29.

Pour ce faire, l'utilisateur doit dans un premier temps exercer une force de pression sur la paroi 69 constitutive du bouton poussoir 33 entraînant ainsi un léger pivotement de la paroi 69, comme indiqué sur la flèche A de la figure 33, ce mouvement entraînant un déplacement du crochet 72, comme indiqué sur la flèche B de la figure 33.

Il est ainsi réalisé un désengagement de l'extrémité 72a du crochet 72 du bord 74 de la paroi latérale 75 des moyens de liaison 29.

Ainsi, si l'utilisateur souhaite remplacer la lame d'essuie-glace 13, il doit désengager l'ensemble dispositif de verrouillage 66/ lame d'essuie-glace 13 des moyens de liaison 29, les moyens de liaison 29 restant selon ce mode de réalisation solidarisés avec la vertèbre 3.

De manière supplémentaire, il est prévu de placer sur la face non accolée aux moyens de liaison 29 de la paroi transversale 67 une pastille de vieillissement 76, de type connue en soi, permettant ainsi de vérifier l'état d'usure et de vieillissement de là lame d'essuie-glace 13 pour ainsi mieux apprécier quand la lame 13 doit être remplacée.

Quand la pastille de vieillissement 76 indique un certain degré d'usure, l'utilisateur change soit le balai 1, soit uniquement la lame 13 et le dispositif de verrouillage 66.

Une nouvelle pastille de vieillissement 76 est alors mise en place: sur le dispositif de verrouillage 66.

## Revendications

1. Balai d'essuie-glace comportant une monture support (2) et une lame d'essuie-glace (13), ce balai comportant en outre des moyens de liaison et une vertèbre (3), ce balai comprenant également un dispositif de verrouillage (56) entre la monture support (2) et la lame d'essuie-glace (13),
ladite lame (13) étant constituée d'une partie supérieure (15) apte à coopérer avec la monture (2) et d'une partie inférieure (16) directement en contact avec le pare-brise ou la vitre à essuyer, ledit dispositif (56) étant de forme complémentaire à ladite partie supérieure (16) de ladite lame (13), et apte à être solidarisé avec les moyens de liaison (29) reliant l'une des extrémités de la monture (2) à l'une des extrémités de ladite lame (13),
lesdits moyens de liaison comportant un évidement interne (30) dans lequel est apte à s'insérer la vertèbre (3) constitutive dudit balai d'essuie-glace (1) et présentant un espace libre (31) dans lequel est apte à s'insérer ladite partie supérieure (15) de ladite lame (13),
**caractérisé en ce qu'**il est apte à être inséré dans un décrochement de matière (57) prévu dans les moyens de liaison (29) de manière à former une partie des parois (59) formant ledit espace libre (31).

2. Balai selon la revendication 1, **caractérisé en ce que** le dispositif de verrouillage se présente sous la forme générale d'un parallélépipède creux constitué d'une paroi supérieure (60), de deux parois latérales (61) et de deux parois inférieures (62) dont les extrémités présentent au moins une dent

3. Balai selon la revendication 1 ou 2, **caractérisé en ce que** le dispositif de verrouillage présente des moyens de blocage sur ladite lame (13) sous la forme d'au moins une dent (63) apte à s'enfoncer partiellement dans ladite lame (13).

4. Balai selon la revendication 1 ou 2, **caractérisé en ce que** le dispositif de verouillage présente des moyens de blocage sur ladite lame (13) sous la forme d'au moins une dent (63) apte à s'engager dans une fente (64) prévue dans ladite larme (13).

5. Balai selon l'une des revendications précédentes, **caractérisé en ce que** le dispositif de verrouillage est réalisé en un matériau métallique.

6. Balai selon l'une des revendications précédentes, **caractérisé en ce que** ledit dispositif (56) est solidarisé de manière inamovible avec ladite lame (13) et lesdits moyens de liaison (29).

7. Balai selon l'une des revendications 1 à 6, **caractérisé en ce que** lesdits moyens de liaison (29) présentent des moyens de désolidarisation (32) aptes à désolidariser l'ensemble solidaire lame (13)/dispositif de verrouillage (56) / moyens de liaison (29) de ladite vertèbre (3).

8. Balai selon l'une des revendications 7, **caractérisé en ce que** l'une caractérisé lesdits moyens de désolidarisation (32) se présentent sous la forme d'au moins un bouton poussoir (33).

9. Balai selon la revendication 1 ou la revendication 2 combinée à la revendication 8, **caractérisé en ce que** ladite vertèbre (3) est maintenue dans ledit évidement interne (30) à l'aide de moyens d'accrochage.

10. Balai selon la revendication précédente, **caractérisé en ce que** lesdits moyens d'accrochage sont sous la forme d'une languette flexible (34) comportant une extrémité (35) en crochet (36).

11. Balai selon les revendications 1 et 10, **caractérisé en ce qu'**un ergot (65) est prévu sur lesdits moyens de liaison (29) apte à désolidariser ladite vertèbre (3) desdits moyens d'accrochage sous la forme de ladite languette flexible (34).

12. Balai selon l'une des revendications précédentes, **caractérisé en ce que** le dispositif de verrouillage comporte une paroi transversale apte à obturer ledit évidement interne (30).

13. Balai selon l'une des revendications précédentes, **caractérisé en ce que** chaque paroi latérale (61) du dispositif présente une protubérance apte à bloquer ledit dispositif (56) dans lesdits moyens de liaison (29).

14. Balai selon l'une des revendications 1 à 12, **caractérisé en ce que** chaque paroi latérale (61) du dispositif présente une patte de verrouillage (53) flexible apte à bloquer ledit dispositif dans lesdits moyens de liaison (29).

## Patentansprüche

1. Scheibenwischer, der ein Traggestell (2) und ein Scheibenwischer-Wischblatt (13) aufweist, wobei dieser Scheibenwischer ferner Mittel zum Verbinden und einen Wirbel (3) aufweist, wobei dieser Scheibenwischer auch eine Verriegelungsvorrichtung (56) zwischen dem Traggestell (2) und dem Scheibenwischer-Wischblatt (13) aufweist,
wobei das Wischblatt (13) aus einem oberen Teil (15) besteht, der geeignet ist, um mit dem Gestell (2) zusammenzuwirken, und aus einem unteren Teil (16), der direkt mit der abzuwischenden Windschutzscheibe oder Scheibe in Berührung ist,
wobei die Vorrichtung (56) eine komplementäre Form zu dem oberen Teil (15) des Wischblatts (13) hat, und
geeignet ist, um fest mit den Verbindungsmitteln (29) verbunden zu werden, die eines der Enden des Gestells (2) mit einem der Enden des Wischblatts (13) verbinden,
wobei die Verbindungsmittel eine interne Aussparung (30) aufweisen, in der sich der Wirbel (3) einfügen kann, der den Scheibenwischer (1) bildet und der einen freien Raum (31) aufweist, in den sich der obere Teil (15) des Wischblatts (13) einfügen kann,
**dadurch gekennzeichnet, dass** er geeignet ist, um in einen Materialrücksprung (57), der in den Verbindungsmitteln (29) vorgesehen ist, derart eingefügt zu werden, dass er einen Teil der Wände (59), die den freien Raum (31) bilden, bildet.

2. Scheibenwischer nach Anspruch 1, **dadurch gekennzeichnet, dass** die Verriegelungsvorrichtung die allgemeine Form eines hohlen Parallelepipeds hat, das aus einer oberen Wand (60), aus zwei Seitenwänden (61) und aus zwei unteren Wänden (62), deren Enden wenigstens einen Zahn (63) aufweisen, besteht.

3. Scheibenwischer nach Anspruch 1 oder 2, **dadurch gekennzeichnet, dass** die Verriegelungsvorrichtung Arretierungsmittel auf dem Wischblatt (13) in der Form wenigstens eines Zahns (63) aufweist, der geeignet ist, um sich teilweise in das Wischblatt (13) einzudrücken.

4. Scheibenwischer nach Anspruch 1 oder 2, **dadurch gekennzeichnet, dass** die Verriegelungsvorrichtung Arretierungsmittel auf dem Wischblatt (13) in Form wenigstens eines Zahns (63) aufweist, der sich in einen Schlitz (64), der in dem Wischblatt (13) vorgesehen ist, einfügen kann.

5. Scheibenwischer nach einem der vorhergehenden Ansprüche, **dadurch gekennzeichnet, dass** die Verriegelungsvorrichtung aus einem metallischen Material hergestellt ist.

6. Scheibenwischer nach einem der vorhergehenden Ansprüche, **dadurch gekennzeichnet, dass** die Vorrichtung (56) nicht abnehmbar mit dem Wischblatt (13) und den Verbindungsmitteln (29) verbunden ist.

7. Scheibenwischer nach einem der Ansprüche 1 bis 6, **dadurch gekennzeichnet, dass** die Verbindungsmittel (29) Mittel zum Trennen (32) aufweisen, die geeignet sind, um die feste Einheit aus Wischblatt (13) / Verriegelungsvorrichtung (56) / Verbindungsmittel (29) des Wirbels (3) zu trennen.

8. Scheibenwischer nach Anspruch 7, **dadurch gekennzeichnet, dass** die Mittel zum Trennen (32) die Form wenigstens eines Druckknopfs (33) haben.

9. Scheibenwischer nach Anspruch 1 oder Anspruch 2, kombiniert mit Anspruch 8, **dadurch gekennzeichnet, dass** der Wirbel (3) in der internen Aussparung (30) mit Hilfe von Anhängmitteln gehalten wird.

10. Scheibenwischer nach dem vorhergehenden Anspruch, **dadurch gekennzeichnet, dass** die Anhängmittel die Form einer biegsamen Lasche (34) haben, die ein Ende (35) in Form eines Hakens (36) aufweist.

11. Scheibenwischer nach einem der Ansprüche 1 und 10, **dadurch gekennzeichnet, dass** ein Dorn (65) auf den Verbindungsmitteln (29) vorgesehen ist, der geeignet ist, um den Wirbel (3) von den Anhängmitteln in Form der biegsamen Lasche (34) zu trennen.

12. Scheibenwischer nach einem der vorhergehenden Ansprüche, **dadurch gekennzeichnet, dass** die Verriegelungsvorrichtung eine Querwand aufweist, die geeignet ist, um die interne Aussparung (30) zu verschließen.

13. Scheibenwischer nach einem der vorhergehenden Ansprüche, **dadurch gekennzeichnet, dass** jede Seitenwand (61) der Vorrichtung einen Vorsprung aufweist, der geeignet ist, um die Vorrichtung (56) in den Verbindungsmitteln (29) zu arretieren.

14. Scheibenwischer nach einem der Ansprüche 1 bis 12, **dadurch gekennzeichnet, dass** jede Seitenwand (61) der Vorrichtung eine biegsame Verriegelungspratze (53) aufweist, die geeignet ist, um die Vorrichtung in den Verbindungsmitteln (29) zu arretieren.

## Claims

1. Windscreen wiper blade comprising a support frame (2) and a wiper blade rubber (13), this wiper blade further comprising connecting means and a vertebra (3), this wiper blade also including a locking device (56) between the support frame (2) and the wiper blade rubber (13),
said rubber (13) consisting of an upper part (15) that is able to engage with the frame (2) and of a lower part (16) that is directly in contact with the windscreen or the window to be wiped,
said device (56) having a shape complementary to said upper part (15) of said rubber (13), and
being able to be secured to the connecting means (29) connecting one of the ends of the frame (2) to one of the ends of said rubber (13),
said connecting means comprising an internal void (30) into which the vertebra (3) that is a constituent part of said windscreen wiper blade (1) is able to be inserted, and having a free space (31) into which said upper part (15) of said rubber (13) is able to be inserted,
**characterized in that** it is able to be inserted into a material indentation (57) provided in the connecting means (29) so as to form a part of the walls (59) forming said free space (31).

2. Wiper blade according to Claim 1, **characterized in that** the locking device is in the general form of a hollow parallelepiped consisting of an upper wall (60), two side walls (61) and two lower walls (62), the ends of which have at least one tooth (63).

3. Wiper blade according to Claim 1 or 2, **characterized in that** the locking device has immobilizing means on said rubber (13) in the form of at least one tooth (63) that is able to partially enter said rubber (13).

4. Wiper blade according to Claim 1 or 2, **characterized in that** the locking device has immobilizing means on said rubber (13) in the form of at least one tooth (63) that is able to be inserted into a slot (64) provided in said rubber (13).

5. Wiper blade according to one of the preceding claims, **characterized in that** the locking device is made of a metal material.

6. Wiper blade according to one of the preceding claims, **characterized in that** said device (56) is secured non-removably to said rubber (13) and said connecting means (29).

7. Wiper blade according to one of Claims 1 to 6, **characterized in that** said connecting means (29) have disconnecting means (32) that are able to disconnect the secure rubber (13)/locking device (56)/connecting means (29) assembly from said vertebra (3).

8. Wiper blade according to Claim 7, **characterized in that** said disconnecting means (32) are in the form of at least one pushbutton (33).

9. Wiper blade according to Claim 1 or Claim 2 combined with Claim 8, **characterized in that** said vertebra (3) is kept in said internal void (30) with the aid of coupling means.

10. Wiper blade according to the preceding claim, **characterized in that** said coupling means are in the form of a flexible tongue (34) comprising an end (35) in the form of a hook (36).

11. Wiper blade according to Claims 1 and 10, **characterized in that** a lug (65) is provided on said connecting means (29) able to disconnect said vertebra (3) from said coupling means in the form of said flexible tongue (34).

12. Wiper blade according to one of the preceding claims, **characterized in that** the locking device comprises a transverse wall that is able to close off said internal void (30).

13. Wiper blade according to one of the preceding claims, **characterized in that** each side wall (61) of the device has a protuberance that is able to immobilize said device (56) in said connecting means (29).

14. Wiper blade according to one of Claims 1 to 12, **characterized in that** each side wall (61) of the device has a flexible locking tab (53) that is able to immobilize said device in said connecting means (29).
